# EUROPÄISCHE PATENTSCHRIFT

(11) **EP 0 559 928 B1**
(45) Veröffentlichungstag und Bekanntmachung des Hinweises auf die Patenterteilung: **23.10.1996**
(21) Anmeldenummer: 92104029.1
(22) Anmeldetag: 09.03.1992
(51) Int. Cl.: H02M 3/156

(54) **Schaltender Gleichspannungswandler**
Switching DC-DC converter
Convertisseur de tension continu à commutation

(43) Veröffentlichungstag der Anmeldung: 15.09.1993
(73) Patentinhaber: SIEMENS AKTIENGESELLSCHAFT, 80333 München (DE)
(72) Erfinder: Schreiber, Harald, Dipl.-Ing., W-4796 Salzkotten (DE)

(56) Entgegenhaltungen:
- DE-A- 3 405 590
- FR-A- 2 466 805
- US-A- 4 636 711
- ELEKTRONIK, Nr. 26, 27. Dezember 1985, München DE, Seiten 57-59; 'Aufwärts-/Abwärts-Schaltregler'

## Beschreibung

Die Erfindung betrifft einen schaltenden Gleichspannungswandler gemäß dem Oberbegriff des Anspruchs 1.

In der Vermittlungstechnik ergibt sich häufig die Notwendigkeit der Erzeugung einer stabilen negativen Spannung von zum Beispiel -40 Volt aus einer wiederum negativen Spannung von zum Beispiel -53 Volt.

Für das Abwärtsregeln einer Spannung sind Abwärts-Schaltregler bekannt, die beispielsweise nach dem Durchflußwandlerprinzip arbeiten. Derartige Schaltregler sind u.a. in Elektronik 26, 1985, Seiten 57 bis 59, insbesondere Bild la beschrieben. Diese Schaltregler gehen von einem System aus, bei denen der Minuspol an Masse angeschlossen ist. Für diese Konfiguration sind integrierte Schaltungen zur Ansteuerung des Regelschalters in den Schaltreglern verfügbar. Dagegen gibt es keine integrierten Schaltungen zur Ansteuerung des Regelschalters in den Schaltreglern bei Systemen, deren Pluspol an Masse angeschlossen ist.

Desweiteren ist aus der DE-A-3 405 509 ein verlustarmer Schaltregler bekannt, bei dem an den Steuereingang des Schalters über einen Kondensator rechteckförmige Schaltsignale gekoppelt sind, wobei der Pluspol ebenfalls nicht an Masse angeschlossen ist.

Aufgabe der Erfindung ist es, einen schaltenden Gleichspannungswandler der eingangs genannten Art anzugeben, der mit hohem elektrischen Wirkungsgrad arbeitet, für Systeme mit dem Pluspol an Masse geeignet ist und dabei mit einem geringen Aufwand an Bauteilen für die Ansteuerung des regelnden Schalters im Gleichspannungswandler auskommt.

Diese Aufgabe wird erfindungsgemäß durch das im kennzeichnenden Teil des Anspruchs 1 angegebene Merkmal gelöst. Der elektrische Wirkungsgrad erreicht ein Höchstmaß, weil die Pulsweite des den regelnden Schalter steuernden Recktecksignals zwischen 0 und 100 Prozent geregelt werden kann. Dadurch kann der Gleichspannungswandler bei Batteriebetrieb beispielsweise unter den eingangs erwähnten Bedingungen noch bis zu einer Entladeschlußspannung von 42 Volt arbeiten. Desweiteren ist bei entsprechender Wahl des regelnden Schalters des Gleichspannungswandlers auch die Regelung einer negativen Spannung aus einer negativen Spannung möglich. Die Ansteuerschaltung für diesen Schalter kann dabei mit wenigen Bauteilen aufgebaut werden.

Vorteilhafte Ausgestaltungen der Erfindung sind Gegenstand von Unteransprüchen. Der Gleichspannungswandler läßt sich danach durch Weg- und Anschalten des Arbeitspunktes des Oszillators bei gleichzeitigem entsprechenden Sperren bzw. Freigeben des durch einen zusätzlichen Schalter gebildeten statischen Ansteuerpfads für den regelnden Schalter über eine Treiberschaltung leicht Ein- und Ausschalten. Das Anschwingen des Oszillators erfolgt hierbei ohne Probleme. Durch eine Schaltung mit einer programmierbaren Zenerdiode läßt sich eine vorgegebene zu regelnde Ausgangsspannung einstellen. Eine Frequenzkompensation kann ebenfalls vorgenommen werden.

Nachfolgend wird ein Ausführungsbeispiel der Erfindung anhand einer Zeichnung näher erläutert.

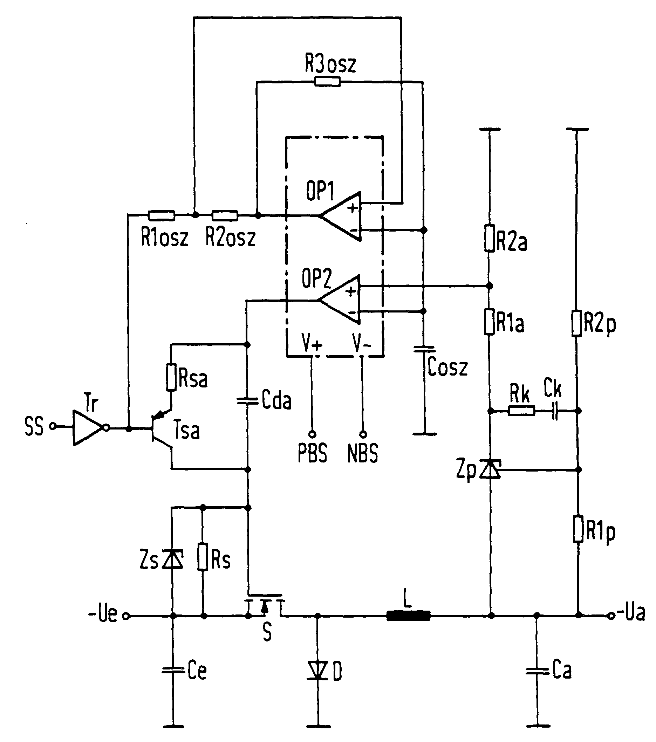

In der Figur ist ein schaltender Gleichspannungswandler dargestellt, der nach dem Durchflußwandlerprinzip arbeitet. Der Gleichspannungswandler weist einen Eingangskondensator Ce, einen regelnden Schalter S, eine Freilaufdiode D, eine Speicherdrossel L und einen Ausgangskondensator Ca auf. Die Funktionsweise eines derartigen Gleichspannungswandlers ist bekannt und wird deshalb hier nicht näher erläutert.

Der Gleichspannungswandler kann dafür ausgelegt sein, aus einer gleichgerichteten negativen Eingangsspannung -Ue, beispielsweise -53 Volt, eine gleichgerichtete stabilisierte negative Ausgangsspannung -Ua, beispielsweise -40 Volt, zu erzeugen. Der Pluspol der Ein- bzw. Ausgangsspannung ist dabei an Masse gelegt.

Die entsprechende Eingangsspannung -Ue wird über den Eingangskondensator Ce eingespeist, während am Ausgangskondensator Ca die entsprechende Ausgangsspannung -Ua abgegriffen werden kann.

Bei dem Schalter S des Gleichspannungswandlers handelt es sich um einen n-Kanal MOS-Feldeffekttransistor. Die Ansteuerung erfolgt über einen in Abhängigkeit von der Ausgangsspannung -Ua die Pulsweite bei fester Frequenz modulierenden Rechtecksignalgeber, der über eine Parallelschaltung aus einer Kapazität Cda und einem mit einem Widerstand Rsa in Serie geschalteten zusätzlichen Schalter Tsa an den Steuereingang des Schalters S angeschlossen ist. Der Rechtecksignalgeber wird durch die Operationsverstärker OP1 und OP2, den Kondensator Cosz und die Widerstände Rlosz, R2osz, R3osz gebildet. Der Rechtecksignalgeber unterteilt sich dabei wiederum in einen Oszillator, gebildet durch den Operationsverstärker OP1, den Kondensator Cosz und die Widerstände Rlosz, R2osz und R3osz, und einen Komparator, gebildet durch den Operationsverstärker OP2. Für die Operationsverstärker OP1 und OP2 kann beispielsweise ein Doppeloperationsverstärkerbaustein verwendet werden, der mit einer positiven Betriebsspannung PBS und einer negativen Betriebsspannung NBS an den Eingängen +V bzw. -V von beispielsweise +5 Volt bzw. -5 Volt betrieben wird. Diese Spannungen sind in der Regel in einem System immer vorhanden, so daß sie nicht noch extra abgeleitet werden müssen.

Der Ausgang des Oszillators ist mit dem Steuereingang des zusätzlichen Schalters Tsa verbunden. Der Oszillator selbst wird als Dreieck/Rechteckgenerator eingesetzt. Das Dreiecksignal sowie ein der Ausgangsspannung -Ua des Gleichspannungswandlers proportionales Gleichspannungssignal, das eine Führungsgröße für die Regelung der Pulsweite des vom Rechtecksignalgebers erzeugten Rechtecksignals darstellt, werden dem Komparator zugeführt, an dessen Ausgang ein pulsweitenmoduliertes Rechtecksignal mit einer Amplitude von beispielsweise 6 bis 8 Volt Spitze Spitze abgegriffen werden kann. Dieses Signal wird zur Überwindung des Potentialunterschiedes am Schalter S über die Kapazität Cda kapazitiv dynamisch auf die Gate-Elektrode als Steuereingang des Schalters S gekoppelt.

Zwischen dem Steuer- und dem Schaltstreckeneingang des Schalters S ist eine Klemmschaltung bestehend aus einer Zenerdiode Zs und einem parallel geschalteten Widerstand Rs angeordnet, die das Ansteuersignal des Schalters S an der Gate-Elektrode beispielsweise auf Werte zwischen -0,6 und +6,8 Volt begrenzt. Der Widerstand Rs sorgt dabei für eine Sperrung des Schalters S in Phasen, in denen er nicht angesteuert wird.

Die parallel zur Kapazität Cda geschaltete Serienschaltung aus dem zusätzlichen Schalter Tsa und dem Widerstand Rsa führt parallel zur dynamischen durch die Kapazität Cda eine statische Ansteuerung des Schalters S durch. Dabei ist der zusätzliche Schalter Tsa in Basisschaltung geschaltet. Es erfolgt keine Phasendrehung. Durch die statische Ansteuerung des Schalters S kann die Pulsweite des Ansteuersignals von O bis 100 Prozent variiert werden.

Bei einer Ausgangsspannung -Ua von -40 Volt und einer 48 Volt-Notstrombatterie kann der Gleichspannungswandler damit bis zu einer Entladeschlußspannung der Batterie von 42 Volt arbeiten.

Außerdem läßt sich der Gleichspannungswandler auf einfache Weise durch Wegschalten des Arbeitspunktes des Oszillators und Sperren des statischen Ansteuerpfades abschalten. Dies kann über eine Treiberschaltung TR geschehen, die mit einer entsprechenden Steuerspannung SS versorgt wird und auf die Verbindung zwischen dem Ausgang des Oszillators und dem Steuereingang des zusätzlichen Schalters Tsa geschaltet ist. Dieser Verbindung kann beispielsweise ein Potential von +5 Volt aufgeprägt werden, wodurch dann der Gleichspannungswandler abgeschaltet wird. Bei einem Potential von 0 Volt ist der Gleichspannungswandler eingeschaltet.

Die Schleifenverstärkung des Regelkreises setzt sich aus der Verstärkung des Rechtecksignalgebers, des Schalters S und einer programmierbaren Zenerdiode Zp zusammen. Die programmierbare Zenerdiode Zp befindet sich in einer Zenerdiodenschaltung bestehend neben der programmierbaren Zenerdiode Zp aus den Widerständen Rlp und R2p. Die Zenerdiodenschaltung ist zwischen dem Ausgang des Gleichspannungswandlers und dem Eingang des Rechtecksignalgebers angeordnet und leitet in Abhängigkeit von der Ausgangsspannung -Ua des Gleichspannungswandlers die Führungsgröße für den pulsweitenmodulierenden Rechtecksignalgeber ab. Die Widerstände R1a und R1b dienen dabei der Anpassung.

Die Strecke des Gleichspannungswandlers wird durch das LC-Filter mit der Speicherdrossel L und dem Ausgangskondensator Ca und der nicht näher dargestellten Last gebildet.

Durch eine Gegenkopplung mit einer Serienschaltung aus einem Widerstand Rk und einem Kondensator Ck in der Beschaltung der programmierbaren Zenerdiode Zp kann eine Frequenzkompensation durchgeführt werden.

## Patentansprüche

1. Schaltender Gleichspannungswandler gemäß dem Durchflußwandlerprinzip mit einem an eine Eingangsspannung anschließbaren Schalter (S), an dessen Schaltstreckenausgang eine Freilaufdiode (D) und ein LC-Filter (L,Ca) angeschlossen ist, wobei an den Steuereingang des Schalters (S) über einen Kondensator (Cda) rechteckförmige Schaltsignale gekoppelt sind,
**dadurch gekennzeichnet**,
daß an den Kondensator ein in Abhängigkeit von der Ausgangsspannung (-Ua) des Gleichspannungswandlers die Pulsweite bei fester Frequenz die Schaltsignale modulierender Rechtecksignalgeber geschaltet ist, der zusätzlich mit einem zum Kondensator (Cda) parallel geschalteten, zusätzlichen Schalter (Tsa) verbunden ist.

2. Schaltender Gleichspannungswandler nach Anspruch 1,
**dadurch gekennzeichnet**,
daß dem Kondensator (Cda) eine Serienschaltung des zusätzlichen Schalters (Tsa) und eines Widerstandes (Rsa) parallel geschaltet ist.

3. Schaltender Gleichspannungswandler nach Anspruch 1 oder 2,
**dadurch gekennzeichnet,**
daß der Pluspol der Eingangsspannung an Masse angeschlossen ist.

4. Schaltender Gleichspannungswandler nach einem der Ansprüche 1 bis 3,
**dadurch gekennzeichnet**,
daß dem Steuer- und Schaltstreckeneingang des Schalters (S) eine Klemmschaltung (Zs,Rs) zur Begrenzung der am Steuereingang des Schalters (S) erlaubten Schaltspannungen angeordnet ist.

5. Schaltender Gleichspannungswandler nach einem der vorhergehenden Ansprüche,
**dadurch gekennzeichnet**,
daß zwischen dem Ausgang des Gleichspannungswandlers und dem Eingang des Rechtecksignalgebers zur Ableitung einer im proportionalen Verhältnis zur Ausgangsspannung (-Ua) des Gleichspannungswandlers stehenden Führungsgröße für die Pulsweitenmodulation des Rechtecksignalgebers eine Zenerdiodenschaltung mit programmierbarer Zenerdiode (Zp) angeordnet ist.

6. Schaltender Gleichspannungswandler nach Anspruch 5,
**dadurch gekennzeichnet**,
daß der Zenerdiodenschaltung mit programmierbarer Zenerdiode (Zp) eine Frequenzkompensationsschaltung (Rk, Ck) zugeordnet ist.

7. Schaltender Gleichspannungswandler nach einem der vorhergehenden Ansprüche,
**dadurch gekennzeichnet,**
daß der Rechtecksignalgeber durch einen Oszillator und einen Komparator mit jeweils einem Operationsverstärker (OP1 bzw. OP2) gebildet ist.

8. Schaltender Gleichspannungswandler nach Anspruch 7, **dadurch gekennzeichnet,**
daß der Ausgang des Oszillators mit einem Steuereingang des zusätzlichen Schalters (Tsa) verbunden ist.

9. Schaltender Gleichspannungswandler nach Anspruch 8,
**dadurch gekennzeichnet**,
daß eine Treiberschaltung (TR) auf eine Verbindung zwischen dem Ausgang des Oszillators den Steuereingang des zusätzlichen Schalters (Tsa) zum Aufprägen eines vorgegebenen Potentials abhängig von einem externen Steuersignal (SS) geschaltet ist.

## Claims

1. Switching DC/DC converter based on the forward converter principle and having a switch (S) which can be connected to an input voltage and to whose switching path output a freewheeling diode (D) and an LC filter (L, Ca) are connected, square-wave switching signals being coupled to the control input of the switch (S) via a capacitor (Cda), characterized in that a square-wave signal transmitter is connected to the capacitor, which square-wave signal transmitter modulates the pulse width at a fixed frequency of the switching signals, as a function of the output voltage (-Ua) of the DC/DC converter, and is additionally connected to an additional switch (Tsa) which is connected in parallel with the capacitor (Cda).

2. Switching DC/DC converter according to Claim 1, characterized in that a series circuit formed by the additional switch (Tsa) and a resistor (Rsa) is connected in parallel with the capacitor (Cda).

3. Switching DC/DC converter according to Claim 1 or 2, characterized in that the positive pole of the input voltage is connected to earth.

4. Switching DC/DC converter according to one of Claims 1 to 3, characterized in that a clamping circuit (Zs, Rs), for limiting the switching voltages allowed at the control input of the switch (S), is arranged at the control and switching-path input of the switch (S).

5. Switching DC/DC converter according to one of the preceding claims, characterized in that a zener diode circuit having a programmable zener diode (Zp) is arranged between the output of the DC/DC converter and the input of the square-wave signal transmitter in order to derive a reference variable for the pulse-width modulation of the square-wave signal transmitter, which reference variable is proportionally related to the output voltage (-Ua) of the DC/DC converter.

6. Switching DC/DC converter according to Claim 5, characterized in that a frequency compensation circuit (Rk, Ck) is assigned to the zener diode circuit having a programmable zener diode (Zp).

7. Switching DC/DC converter according to one of the preceding claims, characterized in that the square-wave signal transmitter is formed by an oscillator and a comparator, each having an operational amplifier (OP1 and OP2 respectively).

8. Switching DC/DC converter according to Claim 7, characterized in that the output of the oscillator is connected to a control input of the additional switch (Tsa).

9. Switching DC/DC converter according to Claim 8, characterized in that a driver circuit (TR) is connected to a junction between the output of the oscillator and the control input of the additional switch (Tsa) in order to impress a predetermined potential as a function of an external control signal (SS).

## Revendications

1. Convertisseur de tension continue à interruption suivant le principe du convertisseur direct, comportant un interrupteur (S), qui peut être connecté à une tension d'entrée et à la sortie de la section d'interruption duquel est connectée une diode (D) de roue libre et un filtre LC (L, Ca), des signaux d'interruption rectangulaires étant appliqués à l'entrée de commande de l'interrupteur (S) par l'intermédiaire d'un condensateur (Cda),
caractérisé en ce que
un générateur de signaux rectangulaires qui module, en fonction de la tension (-Ua) de sortie du convertisseur de tension continue, la largeur d'impulsion à fréquence fixe des signaux d'interruption et qui est relié, en supplément, à un interrupteur (Tsa) supplémentaire branché en parallèle avec le condensateur (Cda), est branché au condensateur.

2. Convertisseur de tension continue à interruption suivant la revendication 1,
caractérisé en ce que
il est branché en parallèle avec le condensateur (Cda), un circuit-série constitué de l'interrupteur supplémentaire (Tsa) et d'une résistance (Rsa).

3. Convertisseur de tension continue à interruption suivant la revendication 1 ou 2,
caractérisé en ce que
le pôle plus de la tension d'entrée est connecté à la masse.

4. Convertisseur de tension continue à interruption suivant l'une des revendications 1 à 3,
caractérisé en ce que
il est monté sur l'entrée de commande et de voie d'interruption de l'interrupteur (S) un circuit (Zs, Rs) de blocage destiné à limiter les tensions d'interruption permises à l'entrée de commande de l'interrupteur (S).

5. Convertisseur de tension continue à interruption suivant l'une des revendications précédentes,
caractérisé en ce que
un circuit à diode Zener (Zp) programmable est monté entre la sortie du convertisseur de tension continue et l'entrée du générateur de signaux rectangulaires pour obtenir une grandeur de conduite de la modulation en largeur d'impulsion du générateur de signaux rectangulaires, qui est proportionnelle à la tension (-Ua) de sortie du convertisseur de tension continue.

6. Convertisseur de tension continue à interruption suivant la revendication 5,
caractérisé en ce que
il est associé au circuit à diode Zener programmable (Zp) un circuit (Rk, Ck) de compensation de fréquence.

7. Convertisseur de tension continue à interruption suivant l'une des revendications précédentes,
caractérisé en ce que
le générateur de signaux rectangulaires est formé d'un oscillateur et d'un comparateur comportant chacun un amplificateur opérationnel (Op1 ou Op2).

8. Convertisseur de tension continue à interruption suivant la revendication 7
caractérisé en ce que
la sortie de l'oscillateur est reliée à une entrée de commande de l'interrupteur supplémentaire (Tsa).

9. Convertisseur de tension continue à interruption suivant la revendication 8,
caractérisé en ce que
un circuit (TR) d'attaque est branché à une connection entre la sortie de l'oscillateur et l'entrée de commande de l'interrupteur supplémentaire (Tsa), pour imposer un potentiel prescrit en fonction d'un signal (SS) extérieur de commande.
